# FASCICULE DE BREVET EUROPEEN

(11) **EP 0 975 450 B1**
(45) Date de publication et mention de la délivrance du brevet: **03.09.2003**
(21) Numéro de dépôt: 98921548.8
(22) Date de dépôt: 16.04.1998
(51) Int. Cl.: B21D 53/88

(54) **PROCEDE DE FABRICATION DE PIECES EN FORME D'AILES ET PIECES RESULTANT DU PROCEDE**
VERFAHREN ZUR HERSTELLUNG VON FLÜGELFÖRMIGEN WERKSTÜCKEN UND MIT DIESEM VERFAHREN HERGESTELLTE WERKSTÜCKE
METHOD FOR MAKING WING-SHAPED PARTS AND RESULTING PARTS

(30) Priorité: 18.04.1997 FR 9705177
(43) Date de publication de la demande: 02.02.2000
(73) Titulaire: VALLOUREC COMPOSANTS AUTOMOBILES VITRY, 51301 Vitry-le-Francois (FR)
(72) Inventeur: VALIN, Daniel, F-51300 Saint-Amand-sur-Fion (FR)
(74) Mandataire: Pellicani, Félix Angelo
(86) Numéro de dépôt international: FR9800769
(87) Numéro de publication internationale: WO98047644

(56) Documents cités:
- DE-A- 1 813 978
- DE-A- 3 335 912
- FR-A- 2 392 838
- FR-A- 2 734 207
- FR-A- 2 737 177
- GB-A- 2 197 051
- US-A- 3 181 336
- US-A- 4 088 001

## Description

La présente invention concerne un procédé de fabrication de pièces métalliques en forme d'ailes par déformation plastique, selon le préambule de la revendication 1, d'une pièce tubulaire ainsi que les pièces résultant de ce procédé.

Les pièces métalliques en forme d'ailes sont d'un usage courant en construction mécanique et plus particulièrement dans la construction des automobiles.

Par pièces en forme d'ailes, on entend dans la présente demande des pièces du type étrier ou chape servant à supporter un axe. On entend aussi de façon plus générale des pièces comportant des ailes, c'est-à-dire des composants de forme plus ou moins allongée et profilée réalisés ou fixés sur une pièce de base, ailes non nécessairement parallèles entre elles et dont la fonction peut être toute autre que de supporter un axe, chaque aile pouvant par exemple avoir sa fonction propre.

Ces pièces en forme d'ailes peuvent être réalisées sur toutes sortes de pièces. L'invention concerne la fabrication de telles pièces en forme d'ailes en tant que pièces faisant partie intégrante d'une extrémité de tube, les ailes et l'extrémité de tube ne formant qu'une seule et même pièce.

Le brevet GB 2.197.051 décrit ainsi une pièce en forme d'ailes du type chape pour joint universel obtenue par emboutissage de tôle, la partie centrale de la chape formant un collier denté intérieurement pour montage coulissant sur une colonne de direction tubulaire. Dans ce cas, la chape n'est pas intégrée à une pièce tubulaire.

On peut aussi envisager dans d'autres cas de rapporter des étriers par soudage mais cette technique présente un certain nombre d'inconvénients liés notamment à la nécessité d'approvisionner séparément pièces tubulaires et étriers et de gérer les stocks en conséquence et à l'existence des soudures qui constituent des zones préférentielles de fissuration dans le cas des pièces soumises à des sollicitations en fatigue. Ces soudures nécessitent donc d'être contrôlées et leur présence n'est pas souhaitée dans les pièces de sécurité.

On connaît des chapes ou étriers intégraux à des pièces tubulaires ; le brevet FR 2.392.838 décrit ainsi des demi-essieux tubulaires de véhicules mais ne décrit pas de mode de réalisation pour obtenir de telles pièces.

On connaît également des pièces tubulaires en forme d'ailes dont les extrémités ont été fendues et écartées de manière à former des branches s'écartant l'une de l'autre.

Ainsi, la demande de brevet français FR 2.734.207, qui représente l'état de la technique le plus proche, décrit un essieu semi-rigide pour véhicule constitué d'un tube dont les extrémités sont fendues puis écartées d'un angle inférieur à 180° pour former chacune deux branches en Y.

On connaît également des pièces similaires telles que celles décrites dans la demande de brevet français FR 2.737.177 constituant des berceaux pour trains avant ou arrière de véhicules.

La gamme de fabrication qui est décrite dans le document FR 2.734.207 consiste à réaliser sur l'extrémité de la pièce tubulaire de départ des saignées longitudinales puis à évaser les languettes obtenues pour former les ailes et d'effectuer des opérations de finition sur la pièce.

La présente invention a pour but un procédé de fabrication de pièces en forme d'ailes permettant d'éviter les difficultés rencontrées avec les techniques antérieures dans lesquelles les ailes sont assemblées, par exemple par soudure, sur une pièce de base.

On a recherché par la présente invention à créer un procédé particulièrement efficace sur le plan de sa productivité et de son coût de mise en oeuvre.

On a cherché aussi à perfectionner les procédés existants de fabrication de pièces en forme d'ailes à partir de tubes, en particulier les procédés décrits dans les documents FR 2.734.207 et FR 2.737.177, étant bien entendu que le procédé de l'invention n'est nullement limité aux applications et au cadre décrits dans ces deux documents.

Suivant l'invention, le procédé de fabrication de pièces métalliques en forme d'ailes consiste à mettre en oeuvre un tronçon de tube et à réaliser sur l'extrémité du tronçon de tube les opérations successives suivantes :
- écrasement d'une zone d'extrémité du tronçon de tube sur une certaine longueur de manière à former au moins deux cordons longitudinaux se projetant vers l'extérieur par repli en épingle à cheveux de la paroi du tronçon de tube ;
- découpe des cordons obtenus dans l'opération précédente de façon à obtenir au moins deux languettes séparées longitudinalement ;
- écartement des languettes du corps du tube pour constituer des ailes et mettre celles-ci en forme ;
- ces ailes pouvant essentiellement être soumises avant ou pendant ou après leur mise en forme à des opérations de finition.

Par tronçon de tube, on entend toute portion d'un tube dont le mode de fabrication, la longueur, les dimensions radiales, la section et la nature du matériau sont adaptés à la pièce en forme d'ailes à fabriquer. En particulier, ce tube n'est pas nécessairement à section ou épaisseur constante sur toute sa longueur et sa section n'est pas nécessairement de révolution. L'acier ou tout autre matériau métallique pourra être utilisé.

De manière préférentielle, l'écrasement de la zone d'extrémité du tronçon de tube pour former au moins deux cordons sera réalisée par déformation à creux sans utilisation de mandrin ou support intérieur du tube et avantageusement l'écrasement sera effectué par compression entre des matrices dont la forme permettra le soutien au moins de paroi externe du tube entre les cordons

De façon avantageuse la découpe des cordons sera réalisée par cisaillement.

Avantageusement, les cordons longitudinaux réalisés en extrémité du tronçon de tube seront au nombre de deux, la pièce obtenue comportant alors deux ailes. Dans le cas de tronçons de tube de révolution, ces deux cordons seront avantageusement également disposés de façon symétrique par rapport à l'axe de l'extrémité du tronçon de tube.

On notera que la découpe des cordons ne nécessitera pas en général d'outillage intérieur au tronçon de tube. L'outillage évacuera les déchets de découpe à l'extérieur du tronçon de tube, ce qui facilitera les opérations de mise en forme suivant cette découpe.

Les languettes obtenues en extrémité du tronçon de tube présentent après découpe des cordons des cambrures ou contre-courbures issues des restes des cordons au niveau de leurs bords latéraux et de la forme initiale de la section du tube. Ces cambrures ou contre-courbures peuvent être conservées en tout ou partie ou éliminées en tout ou partie lors des opérations de mise en forme des ailes et/ou de finition.

La mise en forme des ailes est une opération de déformation plastique qui permettra de donner aux languettes obtenues après l'opération de découpe leur forme finale et voulue. Elle peut être réalisée de toute façon connue et par tout moyen connu en une ou plusieurs opérations et par exemple par évasement ou écartement à l'aide d'un outil du type poinçon, dans des matrices de forme.

Les opérations de finition sont propres à chaque type de pièce.

L'ensemble des opérations selon le procédé de l'invention peut être répété à l'autre extrémité du tronçon de tube si l'on a à former une pièce en forme d'ailes aux deux extrémités.

La cambrure obtenue au stade de découpe des cordons permet d'augmenter le module d'inertie des ailes et par conséquent de les rigidifier en flexion et en torsion longitudinales. Il sera donc avantageux de conserver cette cambrure pour certaines applications.

De telles ailes peuvent cependant être déformées longitudinalement, notamment par cintrage, sans risque de déchirure des zones les plus allongées dans la mesure où elles sont quasiment planes transversalement.

L'invention permet avantageusement de réaliser des pièces comportant deux ailes parallèles en extrémité du tronçon de tube.

Pour cela, on écrase lors de l'opération d'écrasement l'extrémité du tronçon de tube de manière à former deux cordons opposés et les languettes obtenues après la découpe sont êcartées parallèlement à l'axe du tronçon de tube au cours de leur mise en forme de manière à former deux ailes parallèles et distantes l'une de l'autre, ailes qui peuvent par exemple être planes.

Avantageusement, les deux ailes formées peuvent être percées en vis-à-vis au cours de l'opération de finition pour pouvoir loger un axe perpendiculaire au plan des ailes et former ainsi une chape.

L'invention permet aussi avantageusement de réaliser des pièces comportant deux ailes formées en Y en extrémité de tronçon de tube.

Dans ce cas, après écrasement des cordons et leur découpe, l'opération de formage des ailes est effectuée avec un poinçon écartant les languettes du tronçon de tube et éliminant ou non la courbure transversale des languettes après découpe.

L'angle dièdre formé par les ailes à leur point de concours est inférieur à 180° mais les ailes peuvent être cintrées longitudinalement suivant une courbe, par exemple du type arc de cercle, de sorte que l'angle formé par les extrémités des ailes peut être notablement plus faible ou plus grand que celui à leur point de concours. L'élimination de la courbure transversale des ailes permet alors leur cintrage longitudinal sans risque notable de déchirure.

Toujours selon des modes de mise en oeuvre préférés de l'invention, l'ensemble des opérations précédentes peut être effectué sur l'autre extrémité du tronçon de tube et des accessoires peuvent être rapportés, par exemple par soudage, sur les quatre ailes ainsi formées.

On peut ainsi constituer un essieu semi-rigide ou un berceau pour véhicules automobiles en mettant en forme d'ailes en Y les deux extrémités d'un tronçon de tube dont la partie centrale est déformée pour obtenir des caractéristiques élastiques globales déterminées, des accessoires, par exemple du type supports d'articulation élastique, support de roues, extrémités de ressorts, étant rapportés au niveau des ailes par une opération, par exemple du type soudage.

Complémentairement, on peut refermer l'espace entre les ailes d'un même Y et rigidifier l'angle dièdre entre celles-ci en venant rapporter par une opération du type soudage ou équivalent un boîtier à section en U le long des bords des ailes.

La présente invention est également relative à certaines pièces métalliques en forme d'ailes obtenues par le procédé selon l'invention, à savoir des chapes, des étriers, des essieux ou des berceaux pour véhicules automobiles, tels que définis dans les revendications 11 et 12.

On a cherché à réaliser de telles pièces qui soient très rigides et peu coûteuses par rapport aux pièces similaires de l'état de la technique compte tenu des procédés de réalisation utilisés.

L'étrier ou la chape selon l'invention est intégral à une extrémité de tube et comporte deux ailes globalement planes, parallèles entre elles et à l'axe du tube.

L'étrier ou la chape étant obtenu par le procédé objet de l'invention, les bords des ailes présentent avantageusement une cambrure et sont dirigés vers l'extérieur de la chape ou de l'étrier.

L'essieu semi-rigide ou le berceau de véhicule automobile selon l'invention comprend une partie centrale tubulaire et des extrémités chacune constituée de deux ailes formées en Y à partir de la partie centrale tubulaire, l'angle dièdre constitué par les deux ailes à leur point de concours étant inférieur à 180°.

L'essieu semi-rigide ou le berceau étant obtenu par mise en oeuvre du procédé selon l'invention aux deux extrémités d'un tube, chaque aile est transversalement globalement exempte de courbure et les bords desdites ailes présentent une cambrure et sont dirigés vers l'extérieur de l'essieu ou du berceau.

Les figures ci-après décrivent de façon non limitative un mode particulier de réalisation du procédé selon l'invention ainsi que plusieurs exemples de pièces en forme d'ailes obtenues par le procédé.

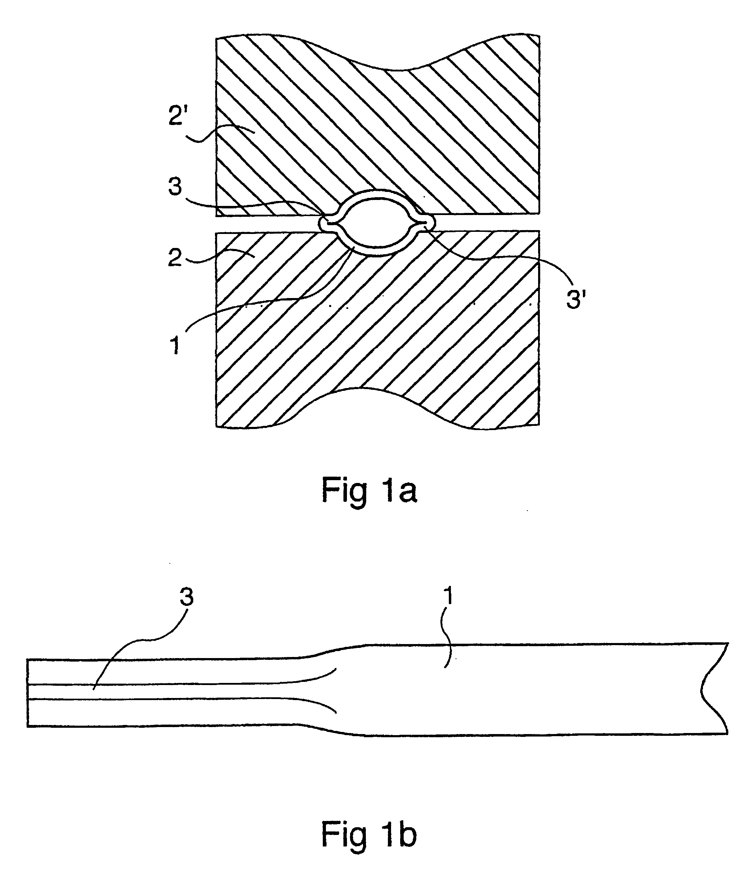

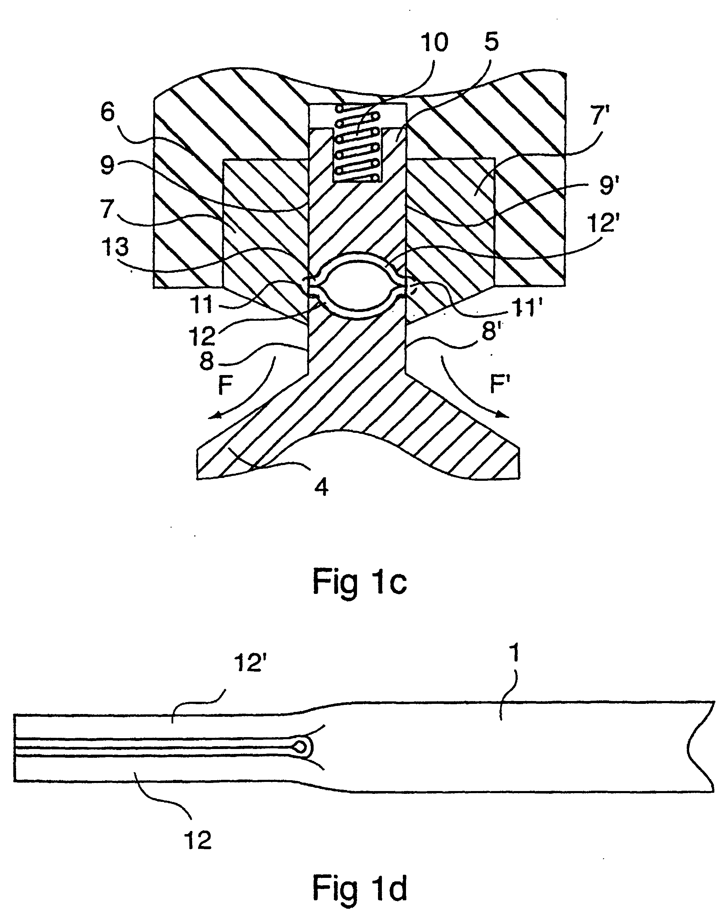

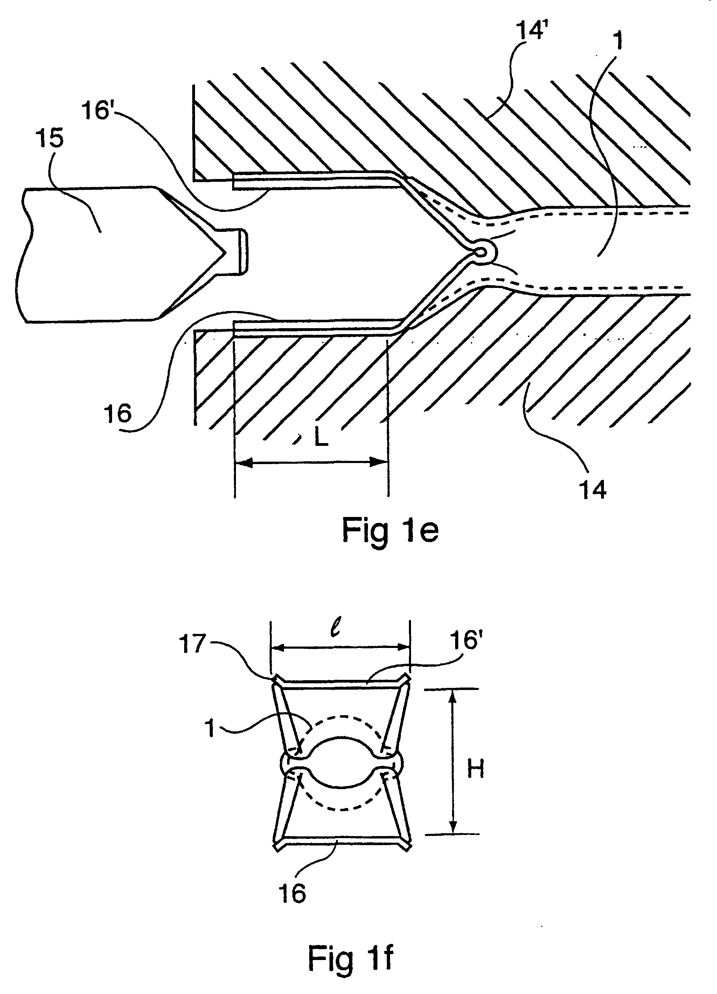

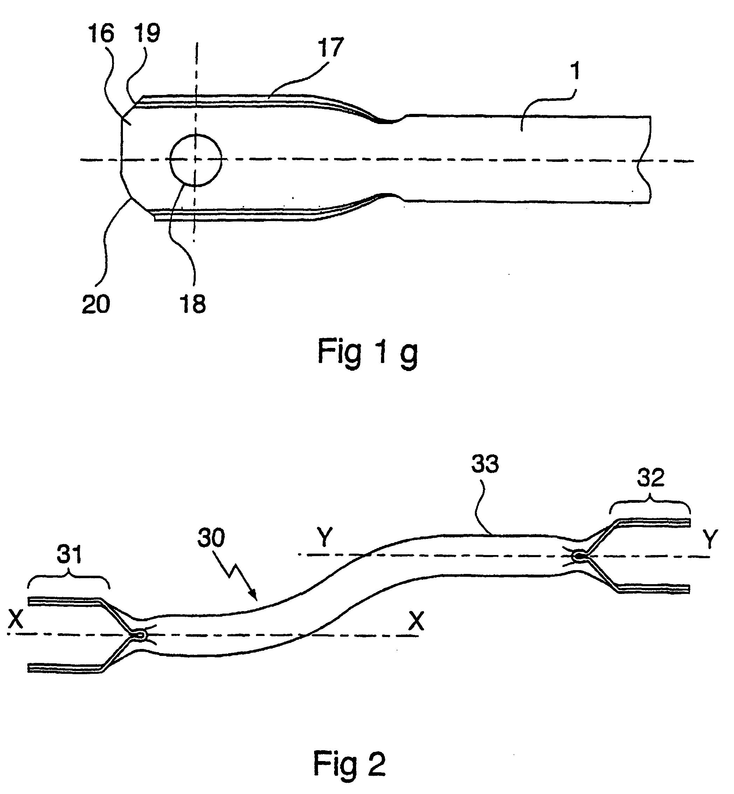

La figure 1 représente l'enchaînement des opérations pour obtenir selon l'invention une chape intégrée à une extrémité de tube.
La figure 1 a) représente l'opération d'écrasement vue d'extrémité en section droite, l'outillage étant représenté en coupe.
La figure 1 b) représente la forme écrasée des cordons en vue de côté.
La figure 1 c) représente l'opération de découpe longitudinale des bords des cordons obtenus dans l'opération précédente vue d'extrémité en section droite, l'outillage étant représenté en coupe.
La figure 1 d) représente en vue de côté la forme des languettes après découpe.
La figure 1 e) représente l'opération de mise en forme des ailes de la chape en vue de côté, les matrices de mise en forme étant représentées en coupe et le mandrin dégagé.
La figure 1 f) représente une vue de face de la chape après mise en forme des ailes.
La figure 1 g) représente en vue de dessus la chape après poinçonnage des trous d'axe ou de croisillon et découpes éventuelles de finition.
La figure 2 représente un exemple de pièce tubulaire cintrée présentant une chape à chaque extrémité.
La figure 3 représente un exemple d'essieu arrière semi-rigide pour véhicule automobile.
La figure 4 représente un détail de la figure 3 en coupe selon le plan B.
La figure 5 représente un autre détail de la même figure 3 en coupe selon le plan A.
La figure 6 représente l'étape de mise en forme de l'essieu arrière semi-rigide pour véhicule automobile de la figure 3, les matrices de mise en forme étant représentées en coupe et le mandrin dégagé.

Les figures 1 a) et 1 b) montrent l'opération d'écrasement du tronçon de tube 1.

Le tronçon de tube 1 utilisé pour réaliser la pièce de cet exemple est un tronçon de tube cylindrique à section constante. L'extrémité de ce tronçon est soumise sur une certaine longueur à une première opération d'écrasement.

Cette opération d'écrasement est effectuée entre deux matrices de forme 2 et 2' et aboutit à la formation de deux cordons longitudinaux 3 et 3' d'une longueur donnée sur des génératrices opposées du tronçon de tube, les cordons formant des replis bord à bord en épingle à cheveux du métal.

Les figures 1 c) et 1 d) illustrent l'opération de découpe des cordons 3, 3' dans l'extrémité écrasée.

Cette extrémité est maintenue ici entre une matrice inférieure fixe 4 et un serre-flanc supérieur 5.

Une matrice supérieure 6 mobile verticalement permet de faire coulisser les outils de coupe 7 et 7' disposés à 3h et 9h (par analogie avec la position de l'aiguille horaire d'une horloge), le long des bords latéraux alignés 8 et 9 et 8' et 9' respectivement de la matrice inférieure 4 et du serre-flanc 5.

Le serre-flanc 5 est appuyé sur l'extrémité supérieure du tube écrasé par l'intermédiaire d'un ressort 10 disposé entre le serre-flanc 5 et la matrice supérieure mobile 6.

Le coulissement vers le bas de la matrice supérieure 6 réalise un cisaillement des projections externes 11, 11' des cordons 3, 3' par les outils 7, 7'.

On obtient ainsi deux languettes symétriques 12-12' dont la courbure est celle des matrices 2 et 2' et qui se terminent latéralement par une contre-courbure telle que 13.

Les déchets de découpe 11, 11' sont éjectés par l'extérieur dans le sens des flèches F, F' de la figure 1 c).

Les figures 1 e) et 1 f) illustrent l'opération de mise en forme des ailes de la chape.

Le tronçon de tube 1 et ses languettes 12, 12' sont serrés entre deux matrices de forme 14 - 14' tandis que le poinçon 15 est inséré dans l'extrémité fendue et vient écarter les languettes 12-12' contre la forme intérieure des matrices 14-14'.

Les languettes 12, 12' prennent alors la forme d'ailes 16, 16' de longueur L, de largeur 1, parallèles entre elles et à l'axe du tronçon de tube 1 et distantes de H. Les ailes obtenues 16-16' sont planes sauf sur leurs bords latéraux tel que 17 qui sont cambrés vers l'extérieur de la pièce, cette cambrure résultant de la contre-courbure telle que 13 elle-même issue des replis tels que 3.

Les cambrures telles que 17 permettent de rigidifier les ailes 16, 16', et de les empêcher de fléchir longitudinalement ou de se tordre lors de l'utilisation ultérieure de la pièce finie.

La figure 1 g) montre la chape obtenue sur l'extrémité du tronçon de tube 1 après des opérations de finition telles que :
- le perçage de trous tels que 18 en vis-à-vis sur les deux ailes 16-16' pour passage d'axe ou de croisillon,
- la découpe d'un chanfrein tel que 19 et/ou d'une finition courbe telle que 20 en extrémité longitudinale des ailes 16, 16'.

Le procédé selon l'invention permet de réaliser de telles chapes pour une très large gamme dimensionnelle de tubes de départ (diamètre, épaisseur) et sans criticité particulière sur la longueur L des ailes de la chape, sur leur largeur 1 et sur leur espacement H.

La figure 2 présente une pièce tubulaire monobloc 30 ainsi obtenue à partir d'un tube 33 en acier de construction mécanique de diamètre extérieur 36 mm et d'épaisseur 4 mm cintré deux fois dans sa partie centrale et muni de chapes 31 et 32 à chaque extrémité, chapes obtenues comme il vient d'être décrit à la figure 1.

La longueur des ailes des chapes est dans l'exemple considéré 50 mm, leur largeur 42 mm et leur espacement 56 mm. Des trous de diamètre 16 mm ont été réalisés en vis-à-vis sur chaque aile.

Dans l'exemple représenté, le plan de symétrie XX de la chape 31 est parallèle au plan de symétrie YY de l'autre chape 32 et distant de l'autre de 76 mm mais ces 2 plans pourraient former entre eux un angle quelconque dans le cas d'autres types de pièces similaires.

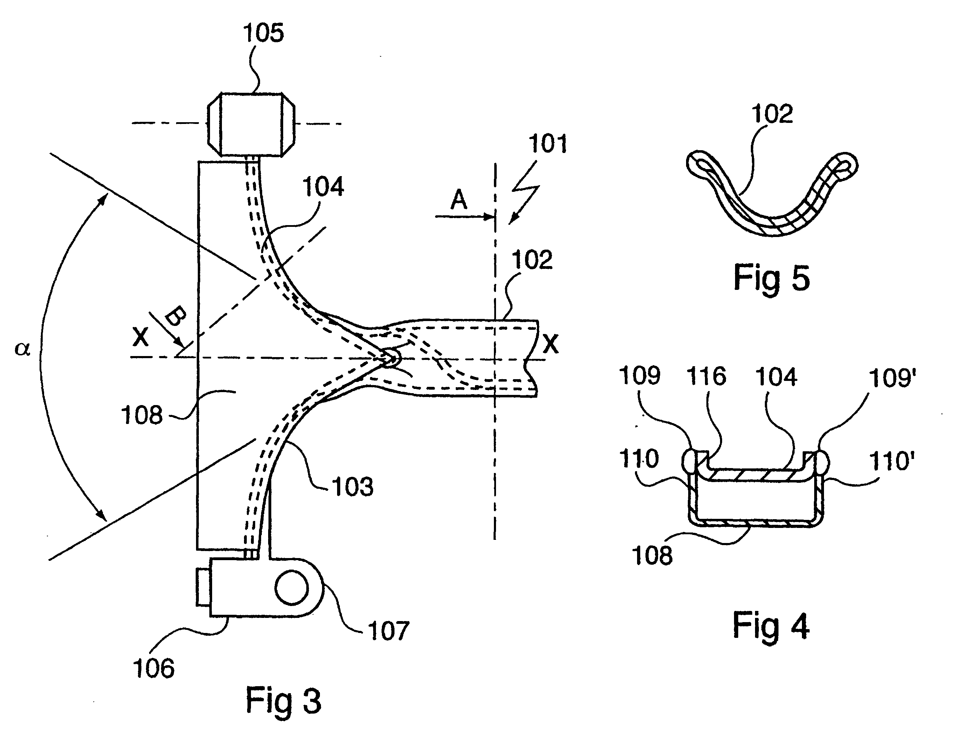

La figure 3 représente un essieu arrière 101 semi-rigide réalisé par le procédé selon l'invention et destiné à un véhicule automobile.

Cet essieu est obtenu à partir d'un tube en acier de construction mécanique soudable dont la partie centrale 102 est mise en forme par des moyens appropriés mécaniques ou d'hydroformage de manière à constituer une pièce de torsion élastique de rigidité connue. La section droite de la partie centrale 102 est représentée à la figure 5.

Chaque extrémité de l'essieu 101 est formée de deux ailes 103 et 104 ne présentant pas de courbure transversale sauf une cambrure telle que 116 au niveau des bords (figure 4) et raccordées à la partie centrale 102, l'angle de l'Y formé au départ par les deux ailes étant de l'ordre de 90° et l'extrémité des ailes étant perpendiculaire à l'axe XX du tube de départ.

Les extrémités des ailes telles que 103 ou 104 peuvent recevoir pour l'aile 104 des paliers 105 supports élastiques d'articulation avec la caisse du véhicule et pour l'aile 103 des fusées de roues 106 et des supports 107 d'extrémité de ressort hélicoïdal.

Les ailes 103 et 104 d'une même extrémité sont rigidifiées et l'angle entre elles fermé par un boîtier 108 réalisé en tôle formée en U et découpée pour suivre le contour des ailes, chaque branche 110-110' du boîtier en U étant soudée en 109-109' sur le bord cambré tel que 116 de l'aile correspondante comme indiqué à la figure 4.

La pièce 101 a été obtenue en soumettant les extrémités d'un tronçon de tube d'acier à une opération d'écrasement puis de découpe des projections externes des deux cordons obtenus selon figures 1 a) à 1 d).

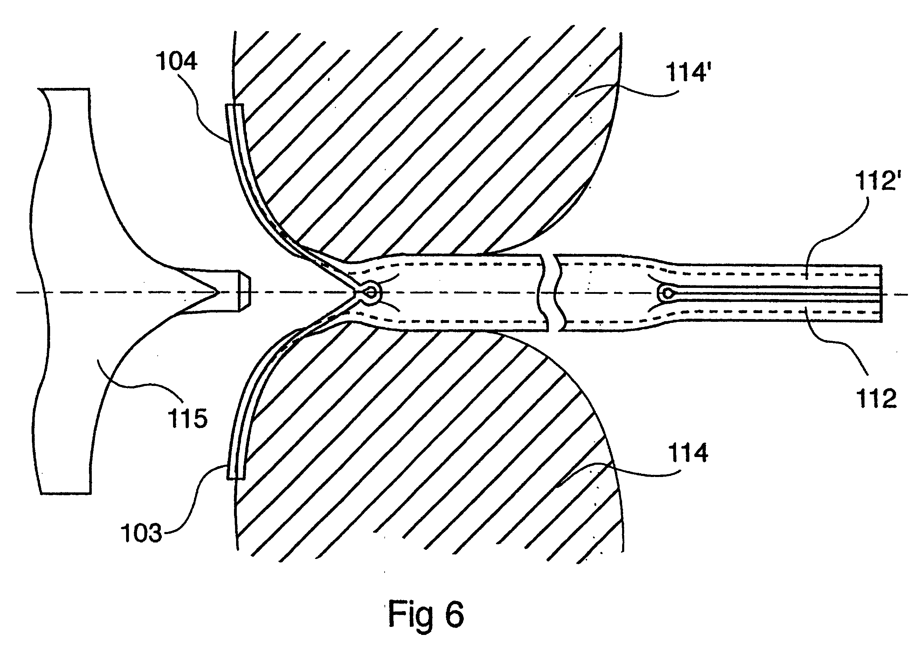

Les ailes 103 et 104 ont ensuite été mises en forme comme présenté à la figure 6 par déformation des languettes 112 et 112' obtenues après découpe.

Le corps du tube est serré dans une matrice de forme constituée des deux parties 114 et 114'.

Le poinçon 115 vient écarter les languettes 112-112' et les plaquer contre la surface latérale des deux parties de matrice 114-114' jusqu'à former un Y, chaque aile ainsi formée étant redressée transversalement de manière à ne plus présenter de courbure significative dans cette direction à part une petite cambrure. 116 au niveau de ses bords latéraux. Un tel profil d'aile permet de cintrer longitudinalement celles-ci sans risque de déchirure des zones les plus allongées.

Le boîtier 108 et les accessoires 105, 106, 107 sont ensuite rapportés par soudage.

De nombreuses variantes et modifications peuvent être apportées au procédé selon l'invention et aux pièces en forme d'ailes obtenues avec le procédé par rapport aux exemples décrits sans pour autant sortir du domaine protégé de l'invention, tel que défini par les revendications.

## Revendications

1. Procédé de fabrication de pièces métalliques en forme d'ailes, pièces réalisées en extrémité d'un tronçon de tube (1) et intégrales avec celui-ci, **caractérisé en ce que** l'on met en oeuvre les opérations successives suivantes :
- écrasement d'une zone d'extrémité du tronçon de tube (1) sur une certaine longueur de manière à former au moins deux cordons longitudinaux (3) se projetant vers l'extérieur par repli en épingle à cheveux de la paroi du tronçon de tube,
- découpe des cordons (3) de façon à obtenir des languettes (12, 112) séparées longitudinalement,
- mise en forme des ailes (16, 103, 104).

2. Procédé de fabrication de pièces métalliques en forme d'ailes selon la revendication 1 **caractérisé en ce que**, avant, pendant ou après l'opération de mise en forme des ailes (16, 103, 104), on soumet les ailes à des opérations de finition.

3. Procédé de fabrication de pièces métalliques en forme d'ailes selon la revendication 1 ou 2 **caractérisé en ce que** l'opération d'écrasement de la zone d'extrémité du tronçon de tube (1) pour former au moins deux cordons (3) est réalisée par déformation à creux sans utilisation de mandrin ou support intérieur du tube.

4. Procédé de fabrication de pièces métalliques en forme d'ailes selon l'une des revendications 1 à 3 **caractérisé en ce que** l'opération d'écrasement de la zone d'extrémité du tronçon de tube (1) pour former au moins deux cordons (3) est effectuée par compression entre des matrices (2, 2') dont la forme permet de soutenir au moins la paroi extérieure du tube (1) entre les cordons (3).

5. Procédé de fabrication de pièces métalliques en forme d'ailes selon l'une des revendications 1 à 4 **caractérisé en ce que** l'opération de découpe est effectuée par cisaillement.

6. Procédé de fabrication de pièces métalliques en forme d'ailes selon l'une des revendications 1 à 5 **caractérisé en ce que** les cordons (3) obtenus au cours de l'opération d'écrasement de l'extrémité du tronçon de tube (1) sont au nombre de deux.

7. Procédé de fabrication de pièces métalliques en forme d'ailes selon l'une des revendications 1 à 6 **caractérisé en ce que** les languettes (12, 112) obtenues après l'opération de découpe des cordons (3) sont aplanies dans l'opération de mise en forme, seule une cambrure (17, 116) résultant de la formation des cordons étant ou non maintenue au niveau de ses bords longitudinaux.

8. Procédé de fabrication de pièces métalliques en forme d'ailes selon la revendication 7 **caractérisé en ce que** l'opération de mise en forme des ailes réalise deux ailes (16) parallèles entre elles et à l'axe du tronçon de tube.

9. Procédé de fabrication de pièces métalliques en forme d'ailes selon la revendication 8 **caractérisé en ce que** l'on finit les pièces par perçage de trous (18) en vis-à-vis dans les ailes (16, 16') pour constituer ainsi une chape ou un étrier (30).

10. Procédé de fabrication de pièces métalliques en forme d'ailes selon la revendication 6 **caractérisé en ce que** l'opération de mise en forme des ailes réalise deux ailes (103, 104) formées en Y, l'angle dièdre constitué par les deux ailes à leur point de concours étant inférieur à 180°.

11. Etrier ou chape (30) intégral à une extrémité de tube et comportant deux ailes globalement planes (16, 16') parallèles entre elles et à l'axe du tube **caractérisé en ce que**, l'étrier ou la chape étant obtenu par le procédé de fabrication selon la revendication 9, les bords desdites ailes présentent une cambrure (17) et sont dirigés vers l'extérieur de la chape ou de l'étrier.

12. Essieu semi-rigide de véhicule automobile ou berceau de véhicule automobile (101) comprenant une partie centrale tubulaire (102) et des extrémités chacune constituée de deux ailes (103, 104) formées en Y à partir de la partie centrale tubulaire, l'angle dièdre constitué par les deux ailes à leur point de concours étant inférieur à 180°, **caractérisé en ce que** ledit essieu ou ledit berceau étant obtenu par mise en oeuvre du procédé selon la revendication 10 aux deux extrémités d'un tube, chaque aile (103, 104) est transversalement globalement exempte de courbure et les bords desdites ailes (103, 104) présentent une cambrure (116) et sont dirigés vers l'extérieur dudit essieu ou dudit berceau.

13. Essieu semi-rigide ou berceau de véhicule automobile (101) selon la revendication 12 **caractérisé en ce que** les angles dièdres constitués par les deux ailes (103, 104) aux deux extrémités de tronçon de tube sont rigidifiés et fermés chacun par un boîtier (108) à section en U rapporté par une opération du type soudage (109, 109') ou tout autre moyen le long des bords desdites ailes.

## Patentansprüche

1. Verfahren zur Herstellung von flügelförmigen Werkstücken aus Metall, Werkstücken, die am Ende eines Rohrabschnitts (1) ausgebildet und mit diesem aus einem Stück sind, **dadurch gekennzeichnet, dass** nacheinander die folgenden Schritte ausgeführt werden:
- Druckverformen eines Endbereichs des Rohrabschnitts (1) über eine bestimmte Länge, sodass mindestens zwei längliche Stränge (3) gebildet werden, die durch Falten der Wand des Rohrabschnitts in die Form einer Haarnadel nach außen gedrückt werden,
- Abschneiden der Stränge (3), sodass der Länge nach getrennte Zungen (12, 122) erhalten werden,
- Formen der Flügel (16, 103, 104).

2. Verfahren zur Herstellung von flügelförmigen Werkstücken aus Metall nach Anspruch 1, **dadurch gekennzeichnet, dass** die Flügel (16, 103, 104) vor, während oder nach dem Schritt des Formens eine Endbearbeitung erfahren.

3. Verfahren zur Herstellung von flügelförmigen Werkstücken aus Metall nach Anspruch 1 oder 2, **dadurch gekennzeichnet, dass** der Schritt des Druckverformens des Endbereichs des Rohrabschnitts (1) zum Bilden von mindestens zwei Strängen (3) durch Hohlverformung ohne Verwendung eines Dorns oder einer inneren Stütze des Rohrs durchgeführt wird.

4. Verfahren zur Herstellung von flügelförmigen Werkstücken aus Metall nach einem der Ansprüche 1 bis 3, **dadurch gekennzeichnet, dass** das Druckverformen des Endbereichs des Rohrabschnitts (1) zum Bilden von mindestens zwei Strängen (3) durch Komprimieren zwischen Matrizen (2, 2') durchgeführt wird, deren Form es erlaubt, zumindest die äußere Wand des Rohrs (1) zwischen den Strängen (3) zu stützen.

5. Verfahren zur Herstellung von flügelförmigen Werkstücken aus Metall nach einem der Ansprüche 1 bis 4, **dadurch gekennzeichnet, dass** das Abschneiden durch Abscheren erfolgt.

6. Verfahren zur Herstellung von flügelförmigen Werkstücken aus Metall nach einem der Ansprüche 1 bis 5, **dadurch gekennzeichnet, dass** die beim Schritt des Druckverformens des Endes des Rohrabschnitts (1) erhaltenen Stränge (3) zwei an der Zahl sind.

7. Verfahren zur Herstellung von flügelförmigen Werkstücken aus Metall nach einem der Ansprüche 1 bis 6, **dadurch gekennzeichnet, dass** die nach dem Abschneiden der Stränge (3) erhaltenen Zungen (12, 112) beim Schritt des Formens eben gemacht werden, wobei nur eine leichte Krümmung (17, 116), die vom Bilden der Stränge herrührt, an ihren Längsrändern beibehalten oder nicht beibehalten wird.

8. Verfahren zur Herstellung von flügelförmigen Werkstücken aus Metall nach Anspruch 7, **dadurch gekennzeichnet, dass** beim Schritt des Formens der Flügel zwei zueinander und zur Achse des Rohrabschnitts parallele Flügel (16) hergestellt werden.

9. Verfahren zur Herstellung von flügelförmigen Werkstücken aus Metall nach Anspruch 8, **dadurch gekennzeichnet, dass** die Werkstücke durch Bohren von einander gegenüberliegenden Löchern (18) in den Flügeln (16, 16') endbearbeitet werden, um so eine Gabel oder einen Bügel (30) zu bilden.

10. Verfahren zur Herstellung von flügelförmigen Werkstücken aus Metall nach Anspruch 6, **dadurch gekennzeichnet, dass** beim Schritt des Formens der Flügel zwei Flügel (103, 104) in Form eines Y hergestellt werden, wobei der V-Winkel zwischen den beiden Flügeln am Punkt ihres Zusammentreffens kleiner als 180° ist.

11. Bügel oder Gabel (30), die mit einem Rohrende aus einem Stück ist und zwei im Wesentlichen ebene Flügel (16, 16') aufweist, die zueinander und zur Rohrachse parallel sind, **dadurch gekennzeichnet, dass** der Bügel oder die Gabel durch das Herstellungsverfahren nach Anspruch 9 erhalten wird, wobei die Ränder der Flügel eine leichte Krümmung (17) aufweisen und von der Gabel oder dem Bügels weg zeigen.

12. Verbundlenkerachse oder Rahmen für ein Kraftfahrzeug (101) mit einem rohrförmigen mittleren Abschnitt (102) und Enden, die jeweils aus zwei Flügeln (103, 104) bestehen, die ausgehend vom rohrförmigen mittleren Abschnitt ein Y bilden, wobei der V-Winkel zwischen den beiden Flügeln am Punkt ihres Zusammentreffens kleiner als 180° ist, **dadurch gekennzeichnet, dass** die Achse oder der Rahmen durch Einsatz des Verfahrens nach Anspruch 10 an den beiden Enden eines Rohrs erhalten wird, wobei jeder Flügel (103, 104) in Querrichtung im Wesentlichen frei von Krümmungen ist und die Ränder der Flügel (103, 104) eine leichte Krümmung (116) aufweisen und von der Achse oder dem Rahmen weg zeigen.

13. Verbundlenkerachse oder Rahmen für ein Kraftfahrzeug (101) nach Anspruch 12, **dadurch gekennzeichnet, dass** die von den beiden Flügeln (103, 104) an den beiden Enden des Rohrabschnitts gebildeten V-Winkel jeweils versteift und durch ein Gehäuse (108) mit U-förmigem Querschnitt geschlossen sind, das durch Schweißen (109, 109') oder auf andere Weise entlang den Rändern der Flügel angefügt wird.

## Claims

1. Process for manufacturing wing-shaped metal parts, parts manufactured on the extremity of a tube portion (1) and forming an integral part with the latter, **characterised in that** the following successive operations are conducted:
- flattening of an area of the extremity of a tube portion (1) over a certain length, so as to shape at least two longitudinal beads (3) projecting toward the outside by folding over in the manner of a hair pin from the wall of the tube portion,
- cutting out of the beads (3) so as to obtain tongues (12, 112) separated in a longitudinal manner,
- shaping of the wings (16, 103, 104).

2. Process for manufacturing wing-shaped metal parts in accordance with claim 1, **characterised in that** before, during or after the shaping operation of the wings (16, 103, 104) the wings undergo finishing operations.

3. Process for manufacturing wing-shaped metal parts in accordance with claims 1 or 2, **characterised in that** the flattening operation of the extremity area of the tube portion (1) to form at least two beads (3) is done by way of unsupported deformation without using a mandrel or inner tube support.

4. Process for manufacturing wing-shaped metal parts in accordance with one of claims 1 through 3, **characterised in that** the flattening operation of the extremity area of the tube portion (1) to shape at least two beads (3) is done by compression between dies (2, 2') whose shape allows at least the outside wall of the tube (1) to be held between the beads (3).

5. A process for manufacturing wing-shaped metal parts in accordance with one of the claims 1 through 4, **characterised in that** the cutting out operation is conducted by way of shearing off.

6. Process for manufacturing wing-shaped metal parts in accordance with one of the claims 1 through 5, **characterised in that** the beads (3) obtained during the flattening operation of the extremity of the tube portion (1) amount to two.

7. Process for manufacturing wing-shaped metal parts in accordance with one of the claims 1 through 6, **characterised in that** the tongues (12, 112) obtained after the operation for cutting out the beads (3) are flattened during the shaping operation, only one bend (17, 116) resulting from shaping the beads being, or not being, kept at the level of their longitudinal edges.

8. Process for manufacturing wing-shaped metal parts in accordance with claim 7, **characterised in that** the operation for shaping the wings forms two wings (16) parallel to each other and to the axis of the tube portion.

9. Process for manufacturing wing-shaped metal parts in accordance with claim 8, **characterised in that** the parts are finished by piercing holes (18) across from each other in the wings (16, 16') so as to form in this way an eye joint link or a fork link (30).

10. Process for manufacturing wing-shaped metal parts in accordance with claim 6, **characterised in that** the operation for shaping the wings results in two Y-shaped wings (103, 104), the dihedral angle formed by the wings at their merging point being less than 180°.

11. Eye joint link or fork link (30) integrated with the tube extremity and comprising two substantially flat wings (16, 16') parallel to each other and to the axis of the tube, **characterised in that**, the eye joint link or fork link being obtained by way of the manufacturing process according to claim 9, the edges of said wings have a bend (17) and are directed toward the outside of the eye joint link or fork link.

12. Semi-rigid axle for a motor vehicle or motor vehicle subframe (101) comprising a central tubular part (102) and ends, each one constituted by two Y-shaped wings (103, 104) emanating from the central tubular part, the dihedral angle formed by the two wings at their merging point being less than 180°, **characterised in that** said axle or said subframe is obtained by implementation of the process according to claim 10 at the two ends of the tube, each wing (103, 104) is transversely substantially without any curvature and the edges of said wings (103, 104) have a fold (116) and are directed toward the outside of said axle or said subframe.

13. Semi-rigid axle or subframe of a motor vehicle (101) according to claim 12, **characterised in that** the dihedral angles formed by the two wings (103, 104) at the ends of the tube portion are rendered rigid and each is enclosed by a housing (108) with a U section resulting from a welding-type operation (109, 109'), or by any other means, along the edges of said wings.
